# FASCICULE DE BREVET EUROPEEN

(11) **EP 2 587 141 B1**
(45) Date de publication et mention de la délivrance du brevet: **24.02.2016**
(21) Numéro de dépôt: 12184183.7
(22) Date de dépôt: 13.09.2012
(51) Int. Cl.: F22B 1/28, F22B 37/36, F16B 5/02

(54) **Appareil électroménager comprenant des moyens de fixation d'un générateur de vapeur sur un chassis**
Household appliance comprising means for attaching a steam generator to a frame
Elektrohaushaltsgerät, das mit Mitteln zur Befestigung eines Dampferzeugers auf einem Träger ausgestattet ist

(30) Priorité: 15.09.2011 FR 1102796
(43) Date de publication de la demande: 01.05.2013
(73) Titulaire: Groupe Brandt, 92500 Rueil-Malmaison (FR)
(72) Inventeur: Bouron, Jean-françois, 85000 Mouilleron le Captif (FR); Chauvet, Antoine, 85190 Aizenay (FR)

(56) Documents cités:
- EP-A1- 2 221 490
- EP-A1- 2 228 546
- DE-A1-102009 011 547
- FR-A1- 2 726 866
- US-A- 5 098 765
- US-A1- 2003 039 529

## Description

La présente invention concerne un appareil électroménager comprenant des moyens de fixation d'un générateur de vapeur sur un châssis.

De manière générale, l'invention concerne l'assemblage d'un générateur de vapeur sur le châssis d'un appareil électroménager, ainsi que l'isolation thermique du générateur de vapeur par rapport au châssis de l'appareil électroménager.

On connaît déjà des appareils électroménagers comprenant un châssis, un générateur de vapeur, et des moyens de fixation du générateur de vapeur sur le châssis.

On connait également le brevet FR2726866 qui décrit un moyen de fixation de deux éléments de carrosserie de véhicule automobile.

La fixation du générateur de vapeur sur le châssis est généralement réalisée au moyen de plusieurs vis de fixation passant respectivement au travers d'un trou de passage d'une patte de fixation du générateur de vapeur et se vissant dans un trou de fixation du châssis.

Cependant, ces appareils électroménagers présentent l'inconvénient que le générateur de vapeur est fixé directement sur le châssis provoquant un échauffement important du châssis au niveau de la zone de fixation du générateur de vapeur sur le châssis.

Cet échauffement est lié à la conduction de chaleur depuis le générateur de vapeur au châssis par les pattes de fixation du générateur de vapeur et les vis de fixation lors de la mise en fonctionnement du générateur de vapeur.

Le matériau du châssis utilisé pour permettre d'assembler le générateur de vapeur sur le châssis doit donc être résistant en température.

Par conséquent, le coût d'obtention de l'appareil électroménager est onéreux et le positionnement du générateur de vapeur sur le châssis est déterminé précisément pour limiter un échauffement important du châssis et des composants de l'appareil électroménager.

La présente invention a pour but de résoudre les inconvénients précités et de proposer un appareil électroménager permettant de fixer un générateur de vapeur sur un châssis tout en isolant thermiquement le châssis par rapport au générateur de vapeur produisant un échauffement lors de sa mise en fonctionnement.

A cet effet, la présente invention vise un appareil électroménager comprenant un châssis, un générateur de vapeur, des moyens de fixation dudit générateur de vapeur sur ledit châssis, lesdits moyens de fixation comprennent au moins une entretoise de fixation dudit générateur de vapeur sur ledit châssis et au moins une encoche de fixation ménagée dans une paroi dudit châssis ; où ladite au moins une entretoise de fixation comprend deux bords latéraux opposés pourvus d'une rainure ; et où lesdites rainures de ladite au moins une entretoise de fixation s'insèrent respectivement dans un bord latéral de ladite au moins une encoche ménagée dans ladite paroi dudit châssis.

Selon l'invention, ledit générateur de vapeur comprend au moins une patte de fixation. Et ladite au moins une entretoise de fixation comprend au moins une paroi d'espacement entre lesdites rainures de ladite au moins une entretoise de fixation s'insérant respectivement dans un bord latéral de ladite au moins une encoche ménagée dans ladite paroi dudit châssis et une paroi de ladite au moins une entretoise de fixation coopérant avec ladite au moins une patte de fixation dudit générateur de vapeur.

Ainsi, le générateur de vapeur est fixé sur le châssis d'un appareil électroménager par des rainures ménagées dans deux bords latéraux opposés d'au moins une entretoise de fixation s'insérant respectivement dans un bord d'au moins une encoche ménagée dans une paroi du châssis.

De cette manière, le châssis est isolé thermiquement du générateur de vapeur produisant un échauffement lors de sa mise en fonctionnement au moyen d'au moins une entretoise de fixation disposée entre le générateur de vapeur et le châssis de l'appareil électroménager.

Ladite au moins une entretoise de fixation permet ainsi de réduire la conduction thermique entre le générateur de vapeur et la paroi du châssis lors de la mise en fonctionnement du générateur de vapeur.

L'assemblage de ladite au moins une entretoise de fixation sur la paroi du châssis au moyen des rainures ménagées dans deux bords latéraux opposés de ladite au moins une entretoise de fixation s'insérant respectivement dans un bord latéral d'au moins une encoche ménagée dans la paroi du châssis permet de diminuer les surfaces de contact entre le générateur de vapeur et la paroi du châssis de sorte à réduire la conduction thermique entre le générateur de vapeur et la paroi du châssis lors de la mise en fonctionnement du générateur de vapeur.

En outre, ladite au moins une entretoise de fixation permet d'éloigner le générateur de vapeur par rapport à la paroi du châssis de sorte à améliorer la dissipation de chaleur autour du générateur de vapeur.

Par ailleurs, le montage du générateur de vapeur sur le châssis est facilité lors de l'assemblage de l'appareil électroménager au moyen de ladite au moins une entretoise de fixation puisque celle-ci est positionnée par insertion de rainures dans une encoche du châssis.

Un tel mode d'assemblage peut permettre de monter le générateur de vapeur sur le châssis en position verticale puisque ladite au moins une entretoise de fixation est positionnée dans une encoche du châssis de sorte à maintenir en position ladite au moins une entretoise de fixation.

Ladite au moins une entretoise de fixation permet ainsi de constituer un élément de sécurité du dispositif d'assemblage du générateur de vapeur sur le châssis de l'appareil électroménager.

Ladite au moins une entretoise de fixation permet d'éloigner le générateur de vapeur par rapport à la paroi du châssis de sorte à réduire l'échauffement transmis au niveau des points de fixation du générateur de vapeur sur le châssis.

Ainsi, lors de la mise en fonctionnement du générateur de vapeur, la paroi du châssis ne subit pas de déformation liée à l'échauffement provoqué par le générateur de vapeur de sorte que le générateur de vapeur conserve sa position par rapport au châssis.

De cette manière, le maintien en position du générateur de vapeur par rapport au châssis permet d'éviter un risque électrique par contact électrique du générateur de vapeur avec un élément métallique, tel que par exemple avec une paroi métallique de la carrosserie de l'appareil électroménager.

Selon un mode de réalisation préféré, ladite paroi dudit châssis comprend également au moins un trou de fixation coopérant avec un élément d'encliquetage élastique de ladite au moins une entretoise de fixation.

Ainsi, ladite au moins une entretoise de fixation est maintenue en position par au moins un élément d'encliquetage élastique s'insérant dans un trou de fixation du châssis.

De cette manière, ladite au moins une entretoise de fixation est maintenue en position sur le châssis avant la fixation du générateur de vapeur sur le châssis au moyen de ladite au moins une entretoise de fixation.

D'autres particularités et avantages apparaîtront encore dans la description ci-après.

Aux dessins annexés, donnés à titre d'exemples non limitatifs :
- la figure 1 est une vue schématique de face d'un générateur de vapeur fixé sur un châssis selon un mode de réalisation de l'invention ;
- la figure 2 est une vue schématique en coupe passant par le plan de coupe A-A de la figure 1 ;
- la figure 3 est une première vue éclatée en perspective de la figure 1 ;
- la figure 4 est une deuxième vue éclatée en perspective de la figure 1 ;
- la figure 5 est une vue schématique de détail des moyens de fixation du générateur de vapeur sur un châssis selon un mode de réalisation de l'invention ;
- la figure 6 est une première vue schématique en perspective d'une entretoise de fixation selon un mode de réalisation de l'invention ;
- la figure 7 est une deuxième vue schématique en perspective d'une entretoise de fixation selon un mode de réalisation de l'invention ; et
- la figure 8 est une vue schématique en coupe passant par le plan de coupe C-C de la figure 1.

On va décrire un appareil électroménager conforme à un mode de réalisation de l'invention.

Cet appareil électroménager peut être un appareil de cuisson, en particulier un four de cuisson à usage domestique ou une cuisinière, ou un appareil de lavage, en particulier une machine à laver et/ou à sécher le linge à usage domestique, ou une machine à laver la vaisselle à usage domestique.

Bien entendu, la présente invention s'applique à tous les types d'appareils électroménagers de cuisson et de lavage comprenant un générateur de vapeur pour alimenter en vapeur une enceinte de traitement, et notamment les appareils électroménagers destinés à être encastrés dans un meuble ou à être en pose libre.

L'appareil électroménager comprend un châssis 1, un générateur de vapeur 2, des moyens de fixation du générateur de vapeur 2 sur le châssis 1.

Le châssis 1 de l'appareil électroménager peut être réalisé par exemple en matière plastique ou dans un matériau métallique.

Préférentiellement, le générateur de vapeur 2 comprend un corps 3 et au moins un élément chauffant 4. Le corps 3 du générateur de vapeur 2 comprend au moins une chambre de génération de vapeur 5. Le corps 3 du générateur de vapeur 2 peut être réalisé par exemple en aluminium.

Cette chambre de génération de vapeur 5 peut être réalisée par exemple sous la forme d'une cavité ou encore d'un tube.

Ledit au moins un élément chauffant 4 du générateur de vapeur 2 peut être soit disposé le long d'une paroi de la chambre de génération de vapeur 5, soit disposé à l'intérieur de la chambre de génération de vapeur 5.

Ledit au moins un élément chauffant 4 peut comprendre par exemple une ou plusieurs résistances électriques.

Le générateur de vapeur 2 peut également comprendre au moins un élément de détection de température 6, tel que par exemple un thermostat de régulation et/ou un thermostat de sécurité, de sorte à contrôler la température de celui-ci.

L'appareil électroménager comprend, de préférence, une enceinte de traitement pouvant être alimentée en vapeur par le générateur de vapeur 2 lors de la mise en oeuvre d'un cycle de fonctionnement de l'appareil électroménager.

L'appareil électroménager comprend également un boîtier dans lequel est logée l'enceinte de traitement.

On notera que de nombreux organes nécessaires au fonctionnement de l'appareil électroménager ont été omis et n'ont pas besoin d'être décrits en détail ici.

Bien entendu, l'appareil électroménager conforme à l'invention comporte l'ensemble des équipements et moyens nécessaires à la mise en oeuvre d'un cycle de fonctionnement classique dans un tel appareil électroménager.

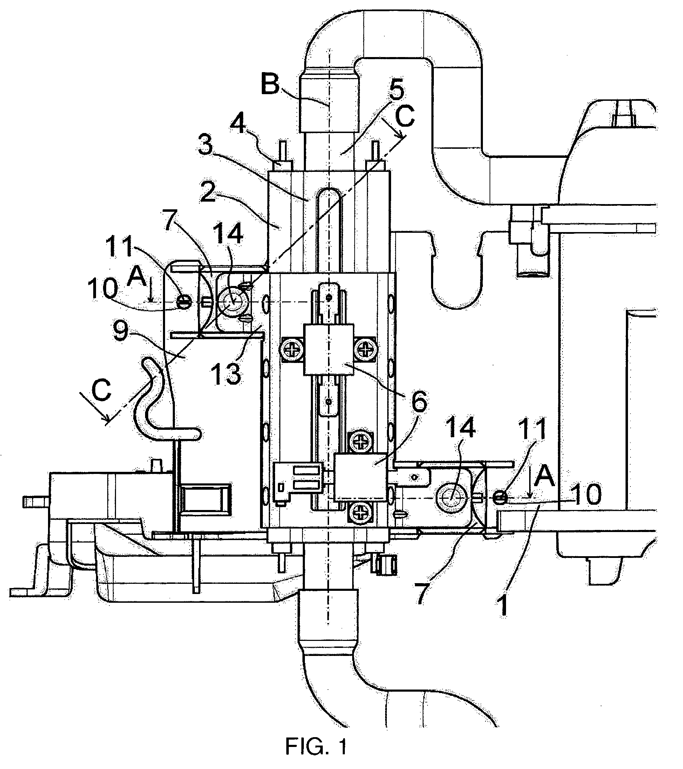

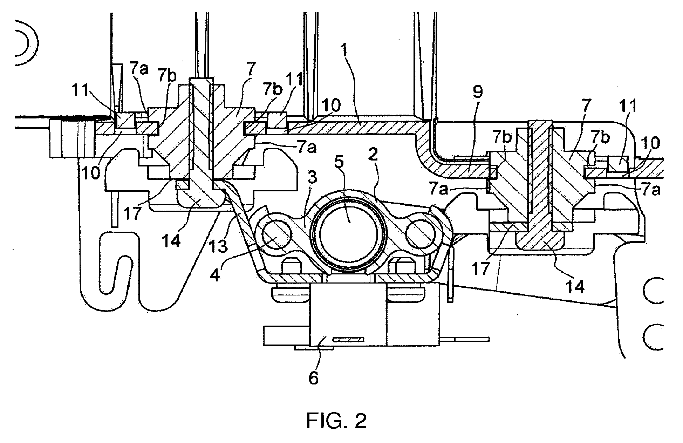

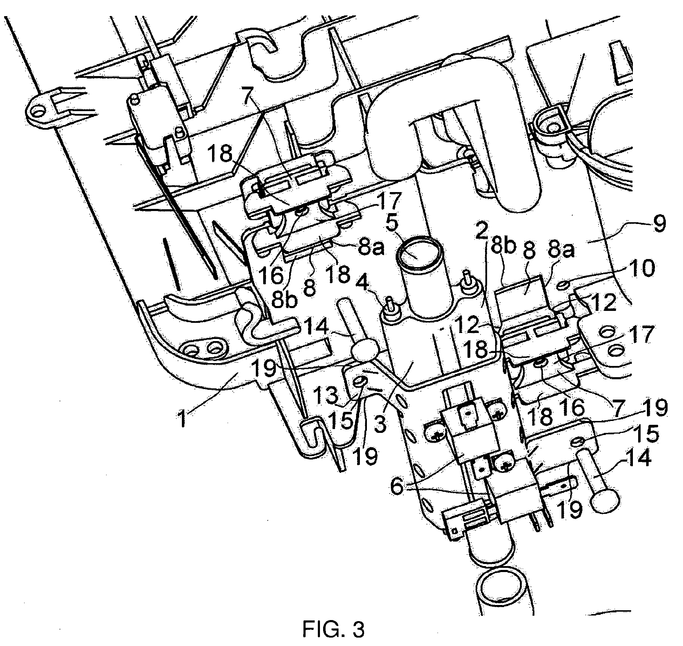

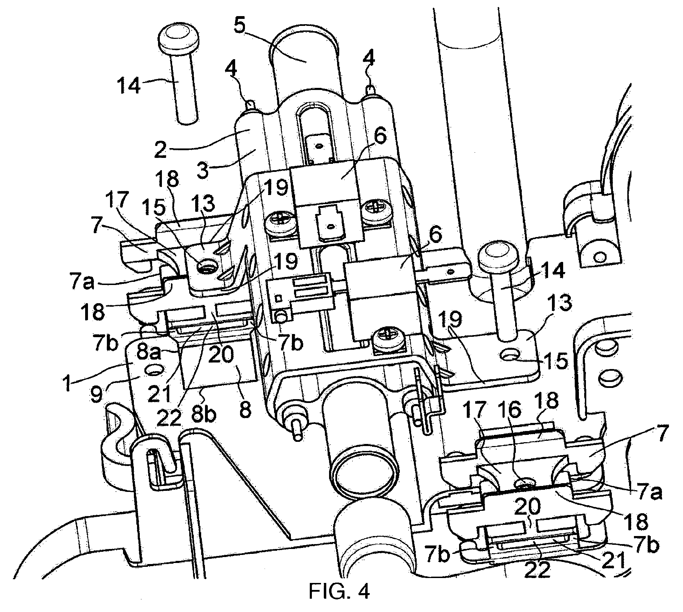

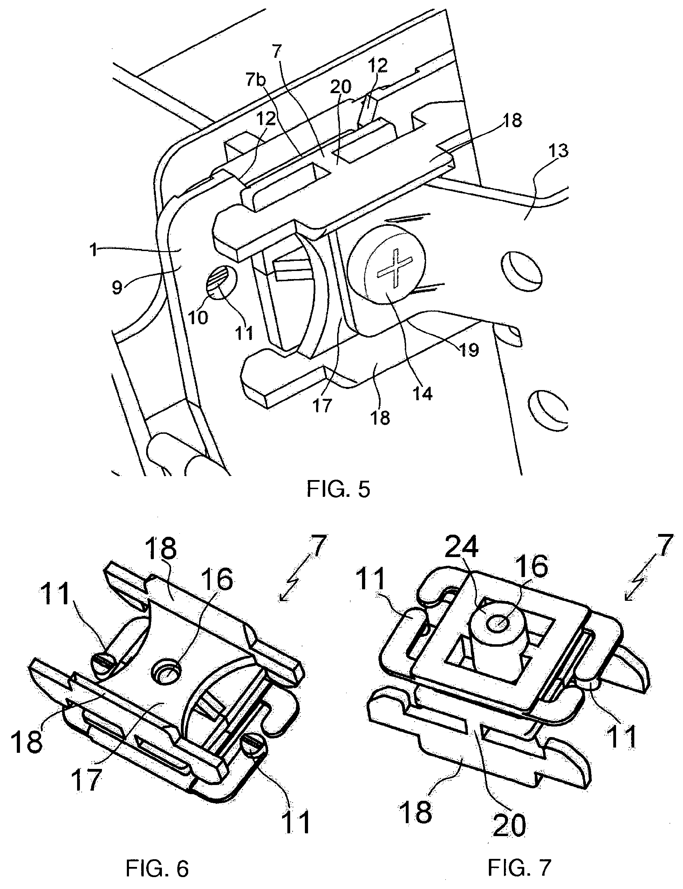

On va décrire à présent, en référence aux figures 1 à 8, les moyens de fixation d'un générateur de vapeur sur un châssis selon un mode de réalisation de l'invention.

Les moyens de fixation comprennent au moins une entretoise de fixation 7 du générateur de vapeur 2 sur le châssis 1 et au moins une encoche de fixation 8 ménagée dans une paroi 9 du châssis 1.

Ladite au moins une entretoise de fixation 7 comprend deux bords latéraux 7a opposés pourvus d'une rainure 7b.

Et les rainures 7b de ladite au moins une entretoise de fixation 7 s'insèrent respectivement dans un bord latéral 8a de ladite au moins une encoche 8 ménagée dans la paroi 9 du châssis 1.

Ainsi, le générateur de vapeur 2 est fixé sur le châssis 1 d'un appareil électroménager par des rainures 7b ménagées dans deux bords latéraux 7a opposés d'au moins une entretoise de fixation 7 s'insérant respectivement dans un bord latéral 8a d'au moins une encoche 8 ménagée dans une paroi 9 du châssis 1.

De cette manière, le châssis 1 est isolé thermiquement du générateur de vapeur 2 produisant un échauffement lors de sa mise en fonctionnement au moyen d'au moins une entretoise de fixation 7 disposée entre le générateur de vapeur 2 et le châssis 1 de l'appareil électroménager.

Ladite au moins une entretoise de fixation 7 permet ainsi de réduire la conduction thermique entre le générateur de vapeur 2 et la paroi 9 du châssis 1 lors de la mise en fonctionnement du générateur de vapeur 2.

L'assemblage de ladite au moins une entretoise de fixation 7 sur la paroi 9 du châssis 1 au moyen des rainures 7b ménagées dans deux bords latéraux 7a opposés de ladite au moins une entretoise de fixation 7 s'insérant respectivement dans un bord latéral 8a d'au moins une encoche 8 ménagée dans la paroi 9 du châssis 1 permet de diminuer les surfaces de contact entre le générateur de vapeur 2 et la paroi 9 du châssis 1 de sorte à réduire la conduction thermique entre le générateur de vapeur 2 et la paroi 9 du châssis 1 lors de la mise en fonctionnement du générateur de vapeur 2.

En outre, ladite au moins une entretoise de fixation 7 permet d'éloigner le générateur de vapeur 2 par rapport à la paroi 9 du châssis 1 de sorte à améliorer la dissipation de chaleur autour du générateur de vapeur 2.

Par ailleurs, le montage du générateur de vapeur 2 sur le châssis 1 est facilité lors de l'assemblage de l'appareil électroménager au moyen de ladite au moins une entretoise de fixation 7 puisque celle-ci est positionnée par insertion de rainures 7b dans une encoche 8 du châssis 1.

Un tel mode d'assemblage peut permettre de monter le générateur de vapeur 1 sur le châssis 1 en position verticale puisque ladite au moins une entretoise de fixation 7 est positionnée dans une encoche 8 du châssis 1 de sorte à maintenir en position ladite au moins une entretoise de fixation 7.

Par ailleurs, l'insertion des rainures 7b des bords latéraux 7a de ladite au moins une entretoise de fixation 7 contre les bords latéraux 8a de ladite au moins une encoche 8 de la paroi 9 du châssis 1 permet de positionner ladite au moins une entretoise de fixation 7 en largeur de sorte à faciliter la fixation du générateur de vapeur 2 sur ladite au moins une entretoise de fixation 7.

Préférentiellement, la paroi 9 du châssis 1 comprend également au moins un trou de fixation 10 coopérant avec un élément d'encliquetage élastique 11 de ladite au moins une entretoise de fixation 7.

Ainsi, ladite au moins une entretoise de fixation 7 est maintenue en position par au moins un élément d'encliquetage élastique 11 s'insérant dans un trou de fixation 10 du châssis 1.

De cette manière, ladite au moins une entretoise de fixation 7 est maintenue en position sur le châssis 1 avant la fixation du générateur de vapeur 2 sur le châssis 1 au moyen de ladite au moins une entretoise de fixation 7.

Ici et de manière nullement limitative, la paroi 9 du châssis 1 comprend deux trous de fixation 10 coopérant respectivement avec un élément d'encliquetage élastique 11 de ladite au moins une entretoise de fixation 7.

Avantageusement, la paroi 9 du châssis 1 comprend un chanfrein 12 ménagé sur chaque bord latéral 8a de ladite au moins une encoche 8.

Ainsi, le positionnement de ladite au moins une entretoise de fixation 7 dans ladite au moins une encoche 8 de la paroi 9 du châssis 1 est facilitée par le chanfrein 12 sur chaque bord latéral 8a de ladite au moins une encoche 8.

De cette manière, les rainures 7b de ladite au moins une entretoise de fixation 7 s'insèrent aisément respectivement dans un bord latéral 8a de ladite au moins une encoche 8 de la paroi 9 du châssis 1, et en particulier avec une possibilité d'orientation de ladite au moins une entretoise de fixation 7 par rapport à ladite au moins une encoche 8 de la paroi 9 du châssis 1.

Dans un mode de réalisation, le générateur de vapeur 2 comprend au moins une patte de fixation 13.

Ici et de manière nullement limitative, ladite au moins une patte de fixation 13 est fixée sur le corps 3 du générateur de vapeur 2.

Ladite au moins une patte de fixation 13 peut être fixée sur le corps 3 du générateur de vapeur 2 par exemple au moyen de vis de fixation ou encore par soudage.

Ici et de manière nullement limitative, ladite au moins une patte de fixation 13 est réalisée en aluminium.

Dans un mode de réalisation, les moyens de fixation comprennent également au moins un élément de fixation par vissage 14, où ledit au moins un élément de fixation par vissage 14 traverse un trou de passage 15 de ladite au moins une patte de fixation 13 du générateur de vapeur 2 et se visse dans un trou de fixation par vissage 16 de ladite au moins une entretoise de fixation 7.

Ainsi, ladite au moins une entretoise de fixation 7 permet de réduire la conduction thermique entre le générateur de vapeur 2 et la paroi 9 du châssis 1 lors de la mise en fonctionnement du générateur de vapeur 2 puisque ledit au moins un élément de fixation par vissage 14 est uniquement fixé au travers de ladite au moins une patte de fixation 13 du générateur de vapeur 2 et dans ladite au moins une entretoise de fixation 7.

Le trou de passage 15 de ladite au moins une patte de fixation 13 du générateur de vapeur 2 est, de préférence, un trou lisse permettant le passage dudit au moins un élément de fixation par vissage 14 de diamètre inférieur au diamètre du trou de passage 15.

Le trou de fixation par vissage 16 de ladite au moins une entretoise de fixation 7 est, de préférence, ménagé dans un fût de vissage 24 permettant de fixer par vissage ladite au moins une patte de fixation 13 du générateur de vapeur 2 contre une paroi 17 de ladite au moins une entretoise de fixation 7.

Ici, ledit au moins un élément de fixation par vissage 14 est une vis de fixation de sorte à fixer ladite au moins une patte de fixation 13 du générateur de vapeur 2 contre une paroi 17 de ladite au moins une entretoise de fixation 7 par passage de la vis de fixation au travers d'un trou de passage 15 de ladite au moins une patte de fixation 13 du générateur de vapeur 2, puis par vissage de la vis de fixation au travers d'un trou de fixation par vissage 16 de ladite au moins une entretoise de fixation 7.

Par ailleurs, ladite au moins une entretoise de fixation 7 est maintenue en position sur le châssis 1 au moyen d'au moins un trou de fixation 10 de la paroi 9 du châssis 1 coopérant avec un élément d'encliquetage élastique 11 de ladite au moins une entretoise de fixation 7 de sorte à faciliter le vissage de ladite au moins une patte de fixation 13 du générateur de vapeur 2 contre une paroi 17 de ladite au moins une entretoise de fixation 7 au moyen d'au moins un élément de fixation par vissage 14.

Préférentiellement, ladite au moins une entretoise de fixation 7 est en matière plastique.

Ainsi, la matière plastique de ladite au moins une entretoise de fixation 7 permet d'isoler thermiquement et électriquement le générateur de vapeur 2 du châssis 1.

De préférence, le matériau de ladite au moins une entretoise de fixation 7 a une tenue en température élevée, pouvant atteindre une valeur supérieure maximale de l'ordre de 240 °C.

De préférence, ladite au moins une entretoise de fixation 7 est isolante électriquement.

Avantageusement, ladite au moins une entretoise de fixation 7 comprend deux parois 18 en saillie coopérant avec au moins deux bords latéraux 19 de ladite au moins une patte de fixation 13.

Ainsi, ladite au moins une patte de fixation 13 du générateur de vapeur 2 est bloquée en rotation par les deux parois 18 en saillie de ladite au moins une entretoise de fixation 7 de sorte à faciliter la fixation par vissage de ladite au moins une patte de fixation 13 du générateur de vapeur 2 sur ladite au moins une entretoise de fixation 7.

Ici, les deux parois 18 en saillie de ladite au moins une entretoise de fixation 7 s'étendent perpendiculairement à une paroi 17 de ladite au moins une entretoise de fixation 7 contre laquelle ladite au moins une patte de fixation 13 du générateur de vapeur 2 prend appui lors du vissage de ladite au moins une patte de fixation 13 du générateur de vapeur 2 sur ladite au moins une entretoise de fixation 7.

Dans un mode de réalisation, ladite au moins une entretoise de fixation 7 comprend au moins une paroi d'espacement 20 entre les rainures 7b de ladite au moins une entretoise de fixation 7 s'insérant respectivement dans un bord latéral 8a de ladite au moins une encoche 8 ménagée dans la paroi 9 du châssis 1 et une paroi 17 de ladite au moins une entretoise de fixation 7 coopérant avec ladite au moins une patte de fixation 13 du générateur de vapeur 2.

Ainsi, ladite au moins une paroi d'espacement 20 de ladite au moins une entretoise de fixation 7 permet d'éloigner ladite au moins une patte de fixation 13 du générateur de vapeur 2 de la paroi 9 du châssis 1 sur laquelle est montée ladite au moins une entretoise de fixation 7 de sorte à isoler thermiquement le châssis 1 par rapport au générateur de vapeur 2.

De cette manière, ladite au moins une paroi d'espacement 20 de ladite au moins une entretoise de fixation 7 permet de diminuer l'échange thermique entre la paroi 17 de ladite au moins une entretoise de fixation 7 coopérant avec ladite au moins une patte de fixation 13 du générateur de vapeur 2 et les rainures 7b de ladite au moins une entretoise de fixation 7 s'insérant respectivement dans un bord latéral 8a de ladite au moins une encoche 8 ménagée dans la paroi 9 du châssis 1 de sorte à réduire la conduction thermique entre le générateur de vapeur 2 et la paroi 9 du châssis 1 lors de la mise en fonctionnement du générateur de vapeur 2.

En outre, ladite au moins une paroi d'espacement 20 de ladite au moins une entretoise de fixation 7 permet d'éloigner le générateur de vapeur 2 par rapport à la paroi 9 du châssis 1 de sorte à améliorer la dissipation de chaleur autour du générateur de vapeur 2 et au niveau de ladite au moins une entretoise de fixation 7.

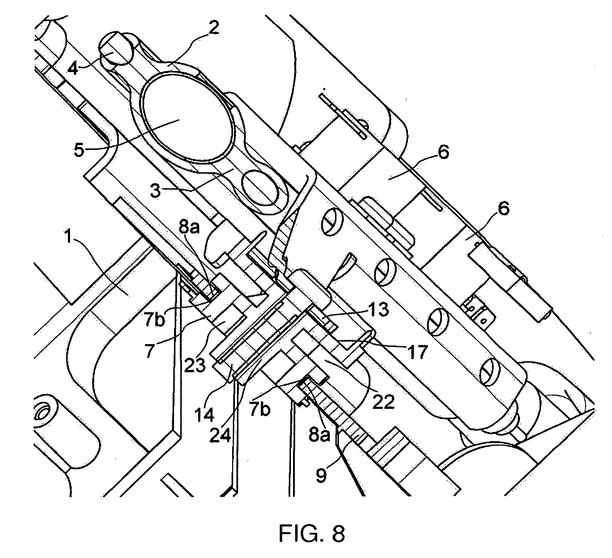

Avantageusement, ladite au moins une entretoise de fixation 7 comporte un espace d'air 22 ménagé au moyen de ladite au moins une paroi d'espacement 20 entre la paroi 17 de ladite au moins une entretoise de fixation 7 coopérant avec ladite au moins une patte de fixation 13 du générateur de vapeur 2 et les rainures 7b de ladite au moins une entretoise de fixation 7 s'insérant respectivement dans un bord latéral 8a de ladite au moins une encoche 8 ménagée dans la paroi 9 du châssis 1, tel qu'illustré à la figure 8.

Ainsi, cet espace d'air 22 créé par ladite au moins une paroi d'espacement 20 de ladite au moins une entretoise de fixation 7 permet de diminuer l'échange thermique entre la paroi 17 de ladite au moins une entretoise de fixation 7 coopérant avec ladite au moins une patte de fixation 13 du générateur de vapeur 2 et les rainures 7b de ladite au moins une entretoise de fixation 7 s'insérant respectivement dans un bord latéral 8a de ladite au moins une encoche 8 ménagée dans la paroi 9 du châssis 1 de sorte à réduire la conduction thermique entre le générateur de vapeur 2 et la paroi 9 du châssis 1 lors de la mise en fonctionnement du générateur de vapeur 2.

Dans le mode de réalisation illustré à la figure 8, l'espace d'air 22 créé par la ladite au moins une paroi d'espacement 20 de ladite au moins une entretoise de fixation 7 est ménagé autour d'un fût de vissage 24 de ladite au moins une entretoise de fixation 7 coopérant avec ledit au moins un élément de fixation par vissage 14, où ledit au moins un élément de fixation par vissage 14 relie ladite au moins une patte de fixation 13 du générateur de vapeur 2 à la paroi 17 de ladite au moins une entretoise de fixation 7.

Préférentiellement, une butée 21 de ladite au moins une entretoise de fixation 7 s'étendant entre les deux bords latéraux 7a opposés de ladite au moins une entretoise de fixation 7 prend appui sur un bord inférieur 8b de ladite au moins une encoche 8 ménagée dans la paroi 9 du châssis 1.

Ainsi, ladite au moins une entretoise de fixation 7 est positionnée par rapport à un bord inférieur 8b de ladite au moins une encoche 8 de la paroi 9 du châssis 1.

De cette manière, la mise en appui d'une butée 21 de ladite au moins une entretoise de fixation 7 contre un bord inférieur 8b de ladite au moins une encoche 8 de la paroi 9 du châssis 1 permet de positionner ladite au moins une entretoise de fixation 7 en hauteur de sorte à faciliter la fixation du générateur de vapeur 2 sur ladite au moins une entretoise de fixation 7.

Par ailleurs, la butée 21 de ladite au moins une entretoise de fixation 7 comprend une rainure 22 s'insérant dans le bord inférieur 8b de ladite au moins une encoche 8 ménagée dans la paroi 9 du châssis 1.

Ainsi, ladite au moins une entretoise de fixation 7 est maintenue en position suivant la profondeur de ladite au moins une encoche 8 de la paroi 9 du châssis 1 par la rainure 22 de la butée 21 de ladite au moins une entretoise de fixation 7 s'insérant dans le bord inférieur 8b de ladite au moins une encoche 8.

Et ladite au moins une entretoise de fixation 7 est maintenue en position suivant la largeur de ladite au moins une encoche 8 de la paroi 9 du châssis 1 par les rainures 7b des bords latéraux 7a de ladite au moins une entretoise de fixation 7 s'insérant dans les bords latéraux 8a de ladite au moins une encoche 8.

Avantageusement, ladite au moins une entretoise de fixation 7 comporte un espace d'air 23 ménagé entre les bords latéraux 7a de ladite au moins une entretoise de fixation 7 comprenant les rainures 7b et un fût de vissage 24 de ladite au moins une entretoise de fixation 7 coopérant avec ledit au moins un élément de fixation par vissage 14, tel qu'illustré à la figure 8.

Ainsi, cet espace d'air 23 ménagé autour du fût de vissage 24 de ladite au moins une entretoise de fixation 7 permet de diminuer l'échange thermique entre le fût de vissage 24 de ladite au moins une entretoise de fixation 7 coopérant avec ledit au moins un élément de fixation par vissage 14 et les rainures 7b de ladite au moins une entretoise de fixation 7 s'insérant respectivement dans un bord latéral 8a de ladite au moins une encoche 8 ménagée dans la paroi 9 du châssis 1 de sorte à réduire la conduction thermique entre le générateur de vapeur 2 et la paroi 9 du châssis 1 lors de la mise en fonctionnement du générateur de vapeur 2.

Dans un mode de réalisation préféré, les moyens de fixation comprennent deux entretoises de fixation 7 du générateur de vapeur 2 disposées de part et d'autre d'un plan B passant par le générateur de vapeur 2, où les deux entretoises de fixation 7 coopèrent respectivement avec une encoche 8 de la paroi 9 du châssis 1.

Ainsi, le générateur de vapeur 2 est fixé de part et d'autre d'un plan B passant par celui-ci au châssis 1 au moyen de deux entretoises de fixation 7.

De cette manière, la fixation du générateur de vapeur 2 au châssis 1 est robuste.

En outre, le châssis 1 est isolé thermiquement du générateur de vapeur 2 au niveau des deux zones de fixation au moyen des deux entretoises de fixation 7.

Par ailleurs, la fixation du générateur de vapeur 2 sur le châssis 1 au moyen de deux entretoises de fixation 7 coopérant respectivement avec une encoche 8 de la paroi 9 du châssis 1 permet de maintenir en position le générateur de vapeur 2 par rapport au châssis 1 suivant les trois directions, largeur, hauteur et profondeur, de sorte à garantir le positionnement du générateur de vapeur 2 à l'intérieur de l'appareil électroménager.

Avantageusement, la fixation du générateur de vapeur 2 sur le châssis 1 est réalisée au moyen de deux entretoises de fixation 7 identiques coopérant avec deux encoches 8 de la paroi 9 du châssis 1.

Ainsi, le générateur de vapeur 2 est fixé par rapport au châssis 1 au moyen de deux entretoises de fixation 7 s'insérant respectivement dans une encoche 8 de la paroi 9 du châssis 1.

Ici, le générateur de vapeur 2 comprend deux pattes de fixation 13 prenant appui respectivement sur une paroi 17 d'une entretoise de fixation 7 de sorte à fixer le générateur de vapeur 2 par rapport au châssis 1.

Dans un mode de réalisation, les deux pattes de fixation 13 du générateur de vapeur 2 peuvent être reliées ensemble de sorte à former une unique pièce. Et cette pièce unique comportant les deux pattes de fixation 13 est fixée sur le corps 3 du générateur de vapeur 2.

Dans un mode de réalisation, les deux encoches 8 de la paroi 9 du châssis 1 sont ménagées le long de deux bords opposés de la paroi 9 du châssis 1 de sorte que les deux entretoises de fixation 7 soient insérées sur la paroi 9 du châssis 1 dans une direction opposée.

Ainsi, le générateur de vapeur 2 est fixé par rapport au châssis 1 au moyen de deux entretoises de fixation 7 s'insérant respectivement dans une encoche 8 de la paroi 9 du châssis 1 et selon une direction opposée.

Avantageusement, les deux entretoises de fixation 7 sont fixées sur la paroi 9 du châssis 1 par encliquetage élastique de sorte à être maintenues sur la paroi 9 du châssis 1 avant la fixation du générateur de vapeur 2 sur le châssis 1 au moyen des entretoises de fixation 7.

Le générateur de vapeur 2 est ensuite fixé sur le châssis 1 au moyen de deux éléments de fixation par vissage 14, où chaque élément de fixation par vissage 14 est passé au travers d'un trou de passage 15 d'une patte de fixation 13 du générateur de vapeur 2 puis vissé au travers d'un trou de fixation par vissage 16 d'une entretoise de fixation 7.

Ainsi, les entretoises de fixation 7 sont solidarisées ensemble par le générateur de vapeur 2.

De cette manière, le positionnement et l'orientation du générateur de vapeur 2 par rapport au châssis 1 sont garantis. Et aucun mouvement du générateur de vapeur 2 par rapport au châssis 1 ne peut être effectué.

La paroi 9 du châssis 1 recevant les entretoises de fixation 7 pour l'assemblage du générateur de vapeur 2 peut être disposée dans une direction verticale, horizontale ou encore inclinée.

Préférentiellement, les deux entretoises de fixation 7 présentent un mode d'assemblage identique sur la paroi 9 du châssis 1, et les deux pattes de fixation 13 du générateur de vapeur 2 présentent un mode d'assemblage identique sur les deux entretoises de fixation 7.

Grâce à la présente invention, le générateur de vapeur est fixé sur le châssis d'un appareil électroménager par des rainures ménagées dans deux bords latéraux opposés d'au moins une entretoise de fixation s'insérant respectivement dans un bord d'au moins une encoche ménagée dans une paroi du châssis.

De cette manière, le châssis est isolé thermiquement du générateur de vapeur produisant un échauffement lors de sa mise en fonctionnement au moyen d'au moins une entretoise de fixation disposée entre le générateur de vapeur et le châssis de l'appareil électroménager.

Ladite au moins une entretoise de fixation permet ainsi de réduire la conduction thermique entre le générateur de vapeur et la paroi du châssis lors de la mise en fonctionnement du générateur de vapeur.

Bien entendu, la présente invention n'est pas limitée aux exemples de réalisation décrits précédemment.

## Revendications

1. Appareil électroménager comprenant un châssis (1), un générateur de vapeur (2), des moyens de fixation dudit générateur de vapeur (2) sur ledit châssis (1),
- lesdits moyens de fixation comprenant au moins une entretoise de fixation (7) dudit générateur de vapeur (2) sur ledit châssis (1) et au moins une encoche de fixation (8) ménagée dans une paroi (9) dudit châssis (1) ;
- où ladite au moins une entretoise de fixation (7) comprend deux bords latéraux (7a) opposés pourvus d'une rainure (7b) ; et
- où lesdites rainures (7b) de ladite au moins une entretoise de fixation (7) s'insèrent respectivement dans un bord latéral (8a) de ladite au moins une encoche (8) ménagée dans ladite paroi (9) dudit châssis (1) ;
**caractérisé en ce que** ledit générateur de vapeur (2) comprend au moins une patte de fixation (13) ; et
**en ce que** ladite au moins une entretoise de fixation (7) comprend au moins une paroi d'espacement (20) entre lesdites rainures (7b) de ladite au moins une entretoise de fixation (7) s'insérant respectivement dans un bord latéral (8a) de ladite au moins une encoche (8) ménagée dans ladite paroi (9) dudit châssis (1) et une paroi (17) de ladite au moins une entretoise de fixation (7) coopérant avec ladite au moins une patte de fixation (13) dudit générateur de vapeur (2).

2. Appareil électroménager selon la revendication 1, **caractérisé en ce que** ladite paroi (9) dudit châssis (1) comprend également au moins un trou de fixation (10) coopérant avec un élément d'encliquetage élastique (11) de ladite au moins une entretoise de fixation (7).

3. Appareil électroménager selon la revendication 1 ou 2, **caractérisé en ce que** ladite paroi (9) dudit châssis (1) comprend un chanfrein (12) ménagé sur chaque bord latéral (8a) de ladite au moins une encoche (8).

4. Appareil électroménager selon l'une quelconque des revendications 1 à 3, **caractérisé en ce que** ladite au moins une entretoise de fixation (7) comprend deux parois (18) en saillie coopérant avec au moins deux bords latéraux (19) de ladite au moins une patte de fixation (13).

5. Appareil électroménager selon l'une quelconque des revendications 1 à 4, **caractérisé en ce que** :
- lesdits moyens de fixation comprennent également au moins un élément de fixation par vissage (14) ;
- où ledit au moins un élément de fixation par vissage (14) traverse un trou de passage (15) de ladite au moins une patte de fixation (13) dudit générateur de vapeur (2) et se visse dans un trou de fixation par vissage (16) de ladite au moins une entretoise de fixation (7).

6. Appareil électroménager selon la revendication 5, **caractérisé en ce que** ladite au moins une entretoise de fixation (7) comporte un espace d'air (23) ménagé entre lesdits bords latéraux (7a) de ladite au moins une entretoise de fixation (7) comprenant lesdites rainures (7b) et un fût de vissage (24) de ladite au moins une entretoise de fixation (7) coopérant avec ledit au moins un élément de fixation par vissage (14).

7. Appareil électroménager selon l'une quelconque des revendications 1 à 6, **caractérisé en ce que** ladite au moins une entretoise de fixation (7) comporte un espace d'air (22) ménagé au moyen de ladite au moins une paroi d'espacement (20) entre ladite paroi (17) de ladite au moins une entretoise de fixation (7) coopérant avec ladite au moins une patte de fixation (13) dudit générateur de vapeur (2) et lesdites rainures (7b) de ladite au moins une entretoise de fixation (7) s'insérant respectivement dans un bord latéral (8a) de ladite au moins une encoche (8) ménagée dans ladite paroi (9) dudit châssis (1).

8. Appareil électroménager selon l'une quelconque des revendications 1 à 7, **caractérisé en ce qu'**une butée (21) de ladite au moins une entretoise de fixation (7) s'étendant entre lesdits deux bords latéraux (7a) opposés de ladite au moins une entretoise de fixation (7) prend appui sur un bord inférieur (8b) de ladite au moins une encoche (8) ménagée dans ladite paroi (9) dudit châssis (1).

9. Appareil électroménager selon l'une quelconque des revendications 1 à 8, **caractérisé en ce que** lesdits moyens de fixation comprennent deux entretoises de fixation (7) dudit générateur de vapeur (2) disposées de part et d'autre d'un plan (B) passant par ledit générateur de vapeur (2), où lesdites deux entretoises de fixation (7) coopèrent respectivement avec une encoche (8) de ladite paroi (9) dudit châssis (1).

10. Appareil électroménager selon l'une quelconque des revendications 1 à 9, **caractérisé en ce que** ladite au moins une entretoise de fixation (7) est en matière plastique.

## Patentansprüche

1. Haushaltsgerät, ein Gehäuse (1), einen Dampfgenerator (2) sowie Mittel zur Befestigung besagten Dampfgenerators (2) an besagtem Gehäuse (1) umfassend,
- wobei besagte Befestigungsmittel über mindestens eine Stütze zur Befestigung (7) besagten Dampfgenerators (2) an besagtem Gehäuse (1) und über mindestens eine Raste (8) verfügt, angebracht an einer Wand (9) besagten Gehäuses (1);
- wobei besagte Befestigungsstütze (7) über zwei einander gegenüberliegende Seitenflächen (7a) verfügt, die jeweils mit einer Nut (7b) versehen sind; und
- wobei besagte Nuten (7b) besagter mindestens einer Befestigungsstütze (7) jeweils an einer Seitenkante (8a) besagter mindestens einer Raste (8) eingeführt werden, die an besagter Wand (9) besagten Gehäuses (1) vorgesehen ist;
**dadurch gekennzeichnet, dass** besagter Dampfgenerator (2) mindestens eine Befestigungslasche (13) umfasst;
und **dadurch gekennzeichnet, dass** besagte mindestens eine Befestigungsstütze (7) mindestens einen Distanzhaltersteg (20) zwischen besagten Nuten (7b) besagter mindestens einer Befestigungsstütze (7) umfasst, die jeweils an einer Seitenkante (8a) besagter mindestens einer Raste (8) an besagter Wand (9) besagten Gehäuses (1) eingeführt wird und wobei eine Platte (17) besagter mindestens einer Befestigungsstütze (7) mit besagter mindestens einer Befestigungslasche (13) besagten Dampfgenerators (2) zusammenwirkt.

2. Haushaltsgerät nach Anspruch 1, **dadurch gekennzeichnet, dass** besagte Wand (9) besagten Gehäuses (1) ebenfalls mindestens ein Befestigungsloch (10) umfasst, das mit einem elastischen Rastelement (11) besagter mindestens einer Befestigungsstütze (7) zusammenwirkt.

3. Haushaltsgerät nach Anspruch 1 oder 2, **dadurch gekennzeichnet, dass** besagte Wand (9) besagten Gehäuses (1) an jeder Seitenkante (8a) besagter mindestens einer Raste (8) eine Fase (12) umfasst.

4. Haushaltsgerät nach einem jeglichen der Ansprüche 1 bis 3, **dadurch gekennzeichnet, dass** besagte mindestens eine Befestigungsstütze (7) zwei überstehende Abschlussplatten (18) hat, an denen die mindestens zwei Seitenflächen (19) besagter mindestens einer Befestigungslasche (13) ansetzen.

5. Haushaltsgerät nach einem beliebigen der Ansprüche 1 bis 4, **dadurch gekennzeichnet, dass**:
- besagte Befestigungsmittel weiterhin mindestens ein durch Verschraubungs-Befestigungselement (14) umfasst;
- Wobei besagtes Verschraubungs-Befestigungselement (14) durch ein Durchgangsloch (15) besagter mindestens einer Befestigungslasche (13) besagten Dampfgenerators (2) geführt wird und dann in ein Schraubloch (16) besagter mindestens einer Befestigungsstütze (7) eingeschraubt wird.

6. Haushaltsgerät nach Anspruch 5, **dadurch gekennzeichnet, dass** besagte mindestens eine Befestigungsstütze (7) einen Zwischenraum (23) umfasst zwischen besagten Seitenflächen (7a) besagter mindestens einer Befestigungsstütze (7) mit besagten Nuten (7b) und einem Schraubenschaft (24) besagter mindestens einer Befestigungsstütze (7), welcher mit besagtem mindestens einem Verschraubungs-Befestigungselement (14) zusammenwirkt.

7. Haushaltsgerät nach einem jeglichen der Ansprüche 1 bis 6, **dadurch gekennzeichnet, dass** besagte mindestens eine Befestigungsstütze (7) einen Zwischenraum (22) umfasst, bewirkt durch besagten mindestens einen Distanzhaltersteg (20) zwischen besagter Platte (17) besagter mindestens einer Befestigungsstütze (7) im Zusammenwirken mit besagter mindestens einer Befestigungslasche (13) besagten Dampfgenerators (2) und besagen Nuten (7b) besagter mindestens einer Befestigungsstütze (7), die eingeführt wird in die entsprechende Seitenkante (8a) der besagten, mindestens einen Raste (8), die an besagter Wand (9) besagten Gehäuses (1) vorgesehen ist.

8. Haushaltsgerät nach einem jeglichen der Ansprüche 1 bis 7, **dadurch gekennzeichnet, dass** ein Anschlag (21) besagter mindestens einer Befestigungsstütze (7) in den Bereich zwischen besagten zwei einander gegenüberliegenden Seitenflächen (7a) besagter mindestens einer Befestigungsstütze (7) hineinragt, auf einer Unterkante (8b) besagter mindestens einer Raste (8) aufliegend, die an besagter Wand (9) besagten Gehäuses (1) vorgesehen ist.

9. Haushaltsgerät nach einem jeglichen der Ansprüche 1 bis 8, **dadurch gekennzeichnet, dass** besagte Befestigungsmittel zwei Befestigungsstützen (7) besagten Dampfgenerators (2) umfassen, beidseitig ausgerichtet auf einer Fläche (B), die durch besagten Dampfgenerator (2) verläuft, wobei besagte zwei Befestigungsstützen (7) jeweils mit einer Raste (8) an besagter Wand (9) besagten Gehäuses (1) zusammenwirken.

10. Haushaltsgerät nach einem jeglichen der Ansprüche 1 bis 9, **dadurch gekennzeichnet, dass** besagte mindestens eine Befestigungsstütze (7) aus Kunststoff gefertigt ist.

## Claims

1. A household electrical appliance comprising a frame (1), a steam generator (2), means of fastening said steam generator (2) onto said frame (1),
- said means of fastening comprising at least one fastening spacer for fastening (7) said steam generator (2) onto said frame (1) and at least one fastening notch (8) arranged in a wall (9) of said frame (1);
- wherein said at least one fastening spacer (7) comprises two opposite lateral edges (7a) provided with a groove (7b); and
- wherein said grooves (7b) of said at least one fastening spacer (7) fit respectively into a lateral edge (8a) of said at least one notch (8)
- arranged in said wall (9) of said frame (1);
**characterized in that** said steam generator (2) comprises at least one mounting bracket (13); and
**in that** said at least one fastening spacer (7) comprises at least one spacing wall (20) between said grooves (7b) of said at least one fastening spacer (7) that respectively fit into a lateral edge (8a) of said at least one notch (8) arranged in said wall (9) of said frame (1) and a wall (17) of said at least one fastening spacer (7) mating with said at least one mounting bracket (13) of said steam generator (2).

2. A household electrical appliance according to claim 1, **characterized in that** said wall (9) of said frame (1) also comprises at least one fastening hole (10) mating with an elastic snap-in component (11) of said at least one fastening spacer (7).

3. A household electrical appliance according to claim 1 or 2, **characterized in that** said wall (9) of said frame (1) comprises a chamfer (12) arranged on each lateral edge (8a) of said at least one notch (8).

4. A household electrical appliance according to any one of claims 1 to 3, **characterised in that** said at least one fastening spacer (7) comprises two protruding walls (18) mating with at least two lateral edges (19) of said at least one mounting bracket (13).

5. A household electrical appliance according to any one of claims 1 to 4, **characterized in that**:
- said means of fastening further comprises at least one screwing fastening element (14);
- wherein said at least one screwing fastening element (14) passes through a hole (15) of said at least one mounting bracket (13) of said steam generator (2) and screws into a screwing fastening hole (16) of said at least one fastening spacer (7).

6. A household electrical appliance according to claim 5, **characterized in that** said at least one fastening spacer (7) comprises an air gap (23) provided between said lateral edges (7a) of said at least one fastening spacer (7) comprising said grooves (7b) and a screwing shank (24) of said at least one fastening spacer (7) mating with said at least one screwing fastening element (14).

7. A household electrical appliance according to any one of the claims 1 to 6, **characterized in that** said at least one fastening spacer (7) comprises an air gap (22) arranged, by means of said at least one spacing wall (20), between said wall (17) of said at least one fastening spacer (7) mating with said at least one mounting bracket (13) of said steam generator (2) and said grooves (7b) of said at least one fastening spacer (7) fitting respectively into a lateral edge (8a) of said at least one notch (8) arranged in said wall (9) of said frame (1).

8. A household electrical appliance according to any one of claims 1 to 7, **characterised in that** said stop (21) of said at least one fastening spacer (7) extending between said opposite lateral edges (7a) of said at least one fastening spacer (7) rests against a lower edge (8a) of said at least one notch (8) arranged in said wall (9) of said frame (1).

9. A household electrical appliance according to any one of claims 1 to 8, **characterized in that** said fastening means comprise two fastening spacers (7) of said steam generator (2) disposed on either side of a plane (B) passing through said steam generator (2), wherein said fastening spacers (7) respectively mate with a notch (8) of said wall (9) of said frame (1).

10. A household electrical appliance according to any one of claims 1 to 9, **characterized in that** said at least one fastening spacer (7) is made of a plastic material.
